Europäisches Patentamt

European Patent Office

Office européen des brevets

(11) Publication number: **0 153 446**
**B1**

## EUROPEAN PATENT SPECIFICATION

(45) Date of publication of patent specification: **10.08.88**

(51) Int. Cl.⁴: **G 01 F 3/08**

(21) Application number: **84111948.0**

(22) Date of filing: **05.10.84**

(54) **Coupling for liquid meters.**

(30) Priority: **27.02.84 US 584040**

(43) Date of publication of application:
**04.09.85 Bulletin 85/36**

(45) Publication of the grant of the patent:
**10.08.88 Bulletin 88/32**

(84) Designated Contracting States:
**BE CH DE FR GB IT LI NL SE**

(56) References cited:
**GB-A-1 312 944**
**US-A-4 391 139**

(73) Proprietor: **Rockwell International Corporation**
**600 Grant Street**
**Pittsburgh Pennsylvania 15219 (US)**

(72) Inventor: **Yanov, David Allan**
**207 Sunset Drive**
**Monroeville Pennsylvania 15146 (US)**
Inventor: **Stamm, Johann Arthur**
**Box 191, R.D. no 3**
**Export Pennsylvania 15632 (US)**
Inventor: **Sutherland, Ray**
**R.D. 1, Box 294B**
**Hopwood Pennsylvania 15445 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

# Description

### Background of the Invention
### Field of the Invention

This invention relates to liquid meters, and in particular, to the means whereby the motion of the flow responsive element is transferred from the moving element to the register.

### Description of the Prior Art

Liquid meters of the type with which the instant invention is particularly concerned are known as oscillating piston meters, a typical example of which are shown in U.S. Patent Nos. 2,449,974 dated September 28, 1948, and 4,391,139 dated July 5, 1983. As particularly shown in the latter patent, the meter is generally comprised of a casing which encloses a measuring chamber which in turn contains an oscillating piston as the flow responsive element. A register is also provided exterior to the measuring chamber. Means must therefore be provided to transmit the motion of the oscillating piston to the exterior of the measuring chamber so taht the motion may be fed into the register to show the volume of liquid which has flowed through the meter. A conventional method of transmitting the motion of the oscillating piston to the exterior of the measuring chamber is to provide a drive post extending from the piston which engages a drive dog which in turn is mounted for rotation within the measuring chamber on one end of a shaft which is journaled for rotation in the top wall of the measuring chamber. The other end of the shaft protrudes exteriorly of the measuring chamber and carries means to drive couple it to the register mechanism. It has been found, however, that a problem arises with the use of the post-dog drive arrangement of such prior art devices. As the piston oscillates under the influence of liquid flowing through the meter, the velocity of the piston is not uniform throughout its cycle of oscillation. In other words, the instantaneous velocity of a point on the piston will vary depending on what point in the cycle of oscillation the piston is at. This nonuniformity of velocity of the piston causes the post and dog to repeatedly disengage and re-engage as the piston oscillates. Each time the post re-engages the dog, it does so with an impact, the energy of impact being dissipated over a relatively small area because of the essentially line contact between the cylindrically shaped post and the planar contact surface of the dog. These repeated impacts produce a high level of noise which emanates from the meter. This noise is particularly loud and noticable when the meter parts are made from plastic and in such meters, the level of noise may be objectionable, particularly when water meters are installed in residences.

### Summary of the Invention as claimed

In order to substantially reduce the noise level attendant upon the use of such prior art drive arrangements. Applicants have provided a post-dog configuration in which the shape of the area on the dog which is contacted by the post is made to conform substantially to the shape of the post so that a large area of contact is provided between the post and the dog. Such an arrangement not only dissipates the energy over a wider contact area, but as the parts approach the point of re-engagement, a significant volume of liquid must be squeezed out of the space between the post and the dog before contact can be made which tends to cushion the impact of re-engagement. Similarly, the dog does not tend to lose contact with the post as easily because a volume of liquid must be pulled into the space between the dog and post as the two disengage. Thus, the complimentarily shaped dog and post result in multiple effects which combine to significantly reduce the level of noise.

### Description of the Drawings

Figure 1 is a cross-sectional elevation view of an oscillating piston type water meter such as is disclosed in Patent No. 4,391,139 employing a conventional post-dog drive arrangement.

Figures 2A, 2B and 2C are top plan view of the measuring chamber with its top cover removed and showing the oscillating piston therein in several different positions as it progresses through its cycle of oscillation.

Figure 3A is a top plan view of the conventional prior art post-dog drive arrangement of Figure 1.

Figure 3B is a view from the right of Figure 3A.

Figure 4A is a top plan view of the post-dog arrangement of the instant invention at a point just before engagement of the post and dog.

Figure 4B is a top plan view of the post-dog arrangement of the instant invention at the point of engagement of the post with the dog.

Figure 4C is a view from the right of Figure B.

### Description of the Preferred Embodiment

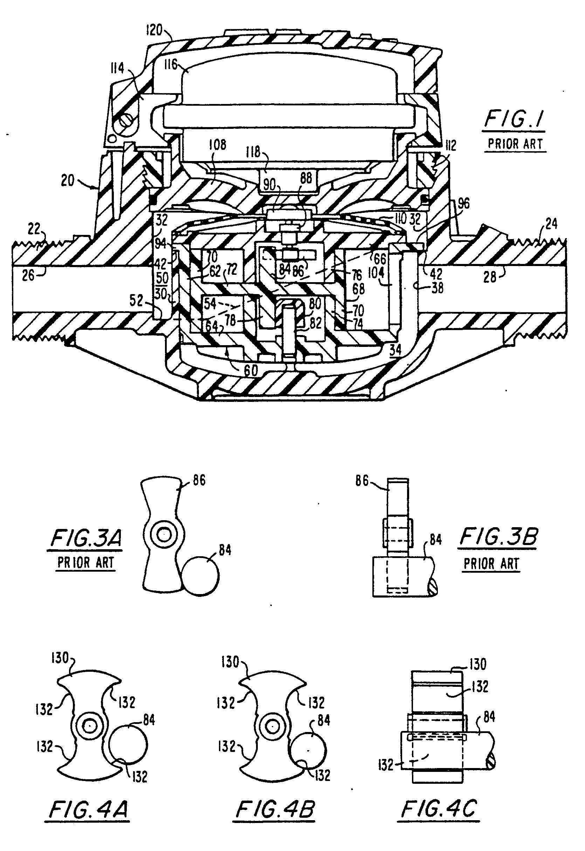

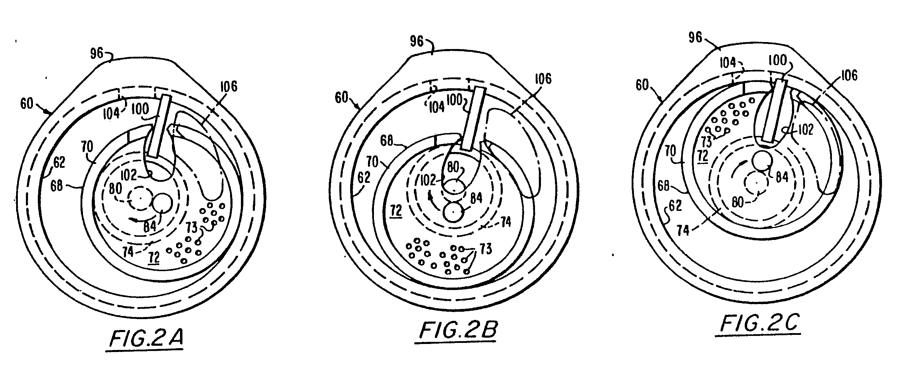

Referring particularly to Figure 1, the meter is comprised of a generally hollow main case 20, the interior of which opens upwardly. Inlet and outlet spuds 27 and 24 formed on opposite sides of the main case have inlet passage 26 and outlet passage 28 respectively extending through the spuds to communicate with the interior of the main case 20. Wall 30 is generally circular in form and concentric with the interior wall 32 of the main case, except that at the outlet end of the case 20, the wall 30 converges towards wall 32 to form a wall portion 38 at the outlet of the main case at a distance from the center of the main case somewhat greater than the radius of the circular portion of the wall 30. The space within the walls 30 and 38 define a measuring chamber compartment 34. Seating surface 42 is formed on -the tops of walls 30 and 38 to provide a continuous seating surface on which the measuring chamber is seated.

An inlet chamber 50 which is in communication with the inlet pasage 26 is defined between walls 30, 32, bottom wall 52 and diametrically opposed

inclined ramps, one of which is shown in dotted line 54 in Figure 1. These ramps 54 merge at one end with the bottom wall 52 of the inlet chamber 50 and at other end with seating surface 42.

A measuring chamber identified generally by the numeral 60 is received within compartment 34 comprised of side walls 30 and 38 and has a cylindrical side wall 62, a bottom wall 64 and removable top wall 66. An oscillating piston 68 within the measuring chamber 60 is comprised of the circular wall 70 and a horizontal wall 72 midway between the vertical extremities of wall 70. Openings 74, only a few of which are shown in Figures 2A, 2B and 2C are uniformly distributed in and extend through wall 72 to connect the spaces above and below the wall 72. A cylindrical guide wall 74 projects upwardly from the bottom wall 64 within the confines of the wall 70 and within the space beneath wall 72 of the oscillating piston. Similarly, a cylindrical guide wall 76 projects downwardly from the central portion of the top wall 66 of the measuring chamber and extends within the confines of the wall 780 in the space above the wall 72. A guide pin 78 of circular cross section projects downwardly from the wall 72 and is in guiding contact with bushing 80 on pin 82 which projects upwardly from the center of the bottom wall 64.

A drive post 84 projects upwardly from the wall 72 and is adapted to engage a drive dog 86 mounted for rotation at the lower end of a bushing and shaft assembly 88 which extends through the top wall 66 of the measuring chamber. At the other extremity of the bushing assembly 88, which is outside the measuring chamber, a driver magnet 90 is mounted for concommitant rotation with the drive dog 86.

A downwardly facing circumferential lip 94 is formed around the top of the vertical wall 62 of the measuring chamber and has a projecting portion 96 formed near the outlet portion of the measuring chamber. The bottom surfaces of the lip 94 and projection 96 form a continuous seating surface which seats on the seating surface 42 on the walls 30 and 38. Thus, when the bottom surface of lip 94 and projection 96 are firmly seated on surface 42, the inlet chamber 50 is sealed from the measuring chamber compartment 34 which may be considered an outlet chamber since it communicates directly with outlet passage 28.

Referring to Figures 2A, 2B and 2C, a division plate 100 extend radially between wall 62 and guide wall 74 and vertically (Figure 1) between the bottom wall 64 and top wall 66 of the measuring chamber. The division plate 100 projects into an opening 102 in horizontal wall 72 to a varying extent depending on the position of the piston in its cycle. It will be understood that the opening 102 accommodates the movement of the piston relative to the division plate. Outlet 104 is formed in the wall 62 of the measuring chamber adjacent to the division plate to provide an outlet for the flow of liquid from the interior of the measuring chamber into chamber 34 and outlet 28 in the main case. The inlet to the interior of the measuring chamber is through top wall 66 and its relative position is shown in dotted line 106 in Figures 2A, 2B and 2C which show the oscillating piston 68 in several different positions as it oscillates throughout one cycle of oscillation.

Referring to Figure 1, a pressure plate 108 is sealingly received in the interior of the main case 20 and is held in place by a retaining ring 112 threaded into the interior of the main case above the pressure plate. A strainer 110 is compressed between the top wall 66 of the measuring chamber and the pressure plate and serves to bias the measuring chamber against the sealing surface 42 as well as to strain foreign material from the liquid before it enters the measuring chamber. A split clamp ring 114 serves to clamp a register mechanism 116 against the top of the pressure plate 108. Cover 120 is pivotally secured to clamp ring 114 to provide protection for the register. The register has a well portion which depends from the bottom and contains a magnet which is magnetically coupled to driver magnet 90 so as to drive the mechanism within register 116 as the piston 68 oscillates under the influence of liquid flow.

Referring now to Figures 1, 2A, 2B and 2C, liquid enters the meter through inlet 26 and flows into inlet chamber 50, through strainer 110 and into the interior of the measuring chamber through the inlet opening 106 in the top wall 66 of the measuring chamber. As shown in Figures 2A—2C, the piston oscillates in a clockwise direction about bushing 80. Figure 2A shows the position of the piston as it begins a cycle and as the water flows through the inlet 106, it reacts against the piston to force the piston in a clockwise oscillating motion. In its motion, the piston is guided by the coacting contact between depending pin 78 and the bushing 80, and by the coacting contact between the interior of wall 70 and the exterior of the guide walls 74 and 76. In Figure 2B, the piston is shown in a position which is approximately midway through a cycle of oscillation and it can be seen that the space to the right of the division plate 100 between the piston and the interior of the measuring chamber is expanding while the space to the left of the division plate between the piston and the interior of the measuring chamber is decreasing. Thus, liquid is flowing into the first-mentioned space while liquid is flowing out of the second-mentioned space and out of the measuring chamber through opening 104 into outlet chamber 34 and outlet passge 28. It will be appreciated that as the piston oscillates in a clockwise direction, the drive post 84 orbits about bushing 80, the center line of which is coaxial with the axis about which the dog 86 rotates.

Figure 2C shows the position of the piston after the piston and the drive post 84 has orbited to a position approximately 180° displaced from that shown in 2B. As the drive post 84 orbits, it drives the dog 86 which in turn through bushing and shaft assembly 88, causes the driving magnet 90 to rotate. A driven magnet within well portion 118 which is magnetically coupled to magnet 90 is thereby driven to drive the mechanism within the register to provide an indication of the volume of flow to the meter.

It has been found that the velocity at which the piston and the post 84 move is not uniform throughout a cycle of oscillation. As the piston passes through the position shown in Figure 2C, the velocoty of the piston is greatest and as it passes through the position shown in Figure 2B, its velocity is at its lowest value. The difference in velocity in those two positions may be in the order of twenty percent. The dog 86 and the mechanism driven by it, that is, the magnet 90 and the driven magnet and mechanism within the register 116 has a certain amount of momentum. Therefore, when the drive post 84 decelerates as it approaches the position shown in Figure 2a, it will become disengaged from the dog 86 because the dog and the mechanism driven by it tend to continue at a uniform velocity. As it proceeds on to the position shown in Figure 2c, the velocity of the piston and drive post will increase causing the post to reengage the dog with a considerable impact. Since the piston oscillates rapidly through many cycles per minute when liquid is flowing through the meter, the post and dog disengage and re-engage many times per minute.

Figure 3A shows a plan view of the dog 86 which is conventional in the prior art. Since the contact area between the cylindrically shaped post and the planar contact surface of the dog is essentially a line contact, the area available to dissipate the energy of impact upon re-engagement is very small. This condition, when repeated in rapid succession many times a minute, results in an objectionable level of noise generated by the meter.

As a means of reducing the noise produced by the prior art drive post-dog arrangement, Applicants have provided the dog shown in Figures 4A, 4B and 4C in which the area of contact between the post and dog is greatly enlarged. Referring to Figures 4A and 4B, Appolicants' dog designated by numberal 130 has pockets 132 which have a shape which is complimentary to the arc of curvature of the surface of post 84. In other words, the arc of curvature of the pockets have the same radius as the cylindrical post. Figure 4A shows the relative positions of the dog 130 and post 84 as the two parts approach re-engagement. It will be noted that due to the complimentary shape of the pockets 132 and 84, a layer of liquid is temporarily entrapped between the post and the pockets 132 which must be forced out of the space between the dog and the pockets before contact can be made. Thus, the film or layer of liquid between the dog and post as they approach re-engagement cushions the impact of re-engagement. Moreover, when the two parts do reach the point of re-engagement as shown in Figure 4C, the area of contact is greatly enlarged whereby the energy of the impact on re-engagement is dissipated over a much larger area.

Applicants' invention also operates to reduce noise by inhibiting the disengagement of the post and dog which reduces the energy to be dissipated upon impact. Just as a volume of liquid must be forced out of the space between the dog and post before engagement, similarly a volume of liquid must be drawn into the space between the dog and post before my appreciable disengagement can take place.

Disengagement is also inhibited by the increased thickness of Applicants' dog as compared to the thickness of dog 86. From a comparison of Figures 3B and 4C, it can be seen that Applicants' dog 130 is considerably thicker than dog 86. In practice, dog 130 is approximately three times thicker than dog 86. Since the dog is rotating in liquid, the increased thickness tends to more rapidly decrease the velocity at which the dog 130 rotates after it has been disengaged from the post 84. This further reduces the distance by which the two parts are disengaged and further decreases the energy of impact to be dissipated upon re-engagement.

In summary, the invention herein described operates in four ways to reduce the level of noise produced by the flow of liquid through an oscillating piston meter: (1) the complimentary configuration of the post and dog increases the area of contact over which the energy of impact is dissipated; (2) the volume of liquid momentarily entrapped between the post and dog as they approach the point of re-engagement cushions the impact; (3) disengagement is inhibited by the fact that a volume of liquid must be drawn into the post-dog region before disengagement can be fully established; and (4) disengagement is further inhibited by the increased viscous drag on the dog as a result of its increased thickness.

**Claims**

1. A liquid meter comprised of a casing (20), a measuring chamber (60) within said casing containing an oscillating piston (68) responsive to the flow of liquid through said meter, a drive coupling within said measuring chamber comprised of a drive post (84) mounted for movement with said piston, and a driven element (86) mounted for rotation within said measuring chamber and adapted to be engaged by said drive post, characterized in that the contact area (132) of said driven element is of complimentary shape to the contact area of said drive post.

2. The meter defined in claim 1 in which the drive post has a cylindrical shape and the contact area of said driven element is shaped to conform substantially to the shape of said drive post.

3. The meter defined in claim 1 in which said driven element is at least twice the thickness of conventional prior art driven elements whereby the viscous drag on said first-mentioned driven element is increased.

4. The meter defined in claim 1 together with means to transmit the movement of said driven element to the exterior of said measuring chamber, a register mechanism and coupling means to couple said first-mentioned means with said register mechanism.

5. The meter defined in claim 4 in which said coupling means is comprised of a magnetic drive.

## Patentansprüche

1. Flüssigkeitsmesser mit einem Gehäuse (20), einer innerhalb dieses Gehäuses angeordneten Meßkammer (60), die einen auf den durch diesen Flüssigkeitsmesser strömenden Flüssigkeitsfluß ansprechenden oszillierenden Kolben (68) enthält, einer innerhalb dieser Meßkammer angeordneten Antriebskupplung, die einen mit dem Kolben bewegbaren Antriebsstab (84) aufweist, und einem angetriebenen Element (86), das drehbar innerhalb dieser Meßkammer gelagert ist und mit diesem Antriebsstab in Eingriff gelangen kann, dadurch gekennzeichnet, daß der berührbereich (132) des angetriebenen Elements eine zum Berührbereich des Antriebsstabes komplementäre Form aufweist.

2. Flüssigkeitsmesser nach Anspruch 1, in welchem der Antriebsstab eine zylindrische Form aufweist und der Berührbereich dieses angetriebenen Elements derart ausgebildet ist, daß es der Form des Antriebsstabes im wesentlichen entspricht.

3. Flüssigkeitsmesser nach Anspruch 1, in welchem dieses angetriebene Element mindestens die doppelte Stärke eines üblichen, dem Stand der Technik entsprechenden angetriebenen Elements aufweist, wodurch der Reibungswiderstand an dem erstgenannten angetriebenen Element vergrößert ist.

4. Flüssigkeitsmesser nach Anspruch 1, zusammen mit Mitteln, um die bewegung dieses angetriebenen Elements aus dieser Meßkammer heraus zu übertragen, mit einem Registriermechanismus und einem Kupplungsmittel, um die erstgenannten Mittel mit dem Registriermechanismus zu verbinden.

5. Flüssigkeitsmesser nach Anspruch 4, in welchem dieses Kupplungsmittel einen magnetischen Antrieb enthält.

## Revendications

1. Compteur à liquide comportant un boîtier (20), un chambre de mesure (60) ménagée à l'intérieur du boîtier et contenant un piston oscillant (68) sensible au débit de liquide traversant le compteur un accouplement d'entraînement monté à l'intérieur de la chambre de mesure, cet accouplement consistant en un doigt d'entraînement (84), monté pour se déplacer avec le piston, et en un élément entraîné (86), monté rotatif dans la chambre de mesure et destiné à être attaqué par le doigt d'entraînement, caractérisé en ce que la zone de contact (132) de l'élément entraîné a une forme complémentaire de celle de la zone de contact du doigt d'entraînement.

2. Compteur conforme à la revendication 1, dans lequel le doigt d'entraînement est de forme cylindrique et la zone de contact de l'élément entraîné est conformée pour correspondre sensiblement à la forme du doigt d'entraînement.

3. Compteur conforme à la revendication 1, dans lequel l'élément entraîné a une épaisseur égale à au moins deux fois celle des éléments entraînés classiques de la technique antérieure, de sorte que la force de traînée visqueuse qui s'exerce sur l'élément entraîné cité en premier est augmentée.

4. Compteur conforme à la revendication 1, comportant des moyens pour transmettre le mouvement de l'élément entraîné à l'extérieur de la chambre de mesure, un mécanisme totalisateur et des moyens d'accouplement pour accoupler les moyens cités en premier au mécanisme totalisateur.

5. Compteur conforme à la revendication 4, dans lequel les moyens d'accouplement comportent un entraînement magnétique.

*FIG.1*
PRIOR ART

*FIG.3A*
PRIOR ART

*FIG.3B*
PRIOR ART

*FIG.4A*

*FIG.4B*

*FIG.4C*

*FIG.2A*          *FIG.2B*          *FIG.2C*

0 153 446